# EUROPEAN PATENT APPLICATION

(11) **EP 4 431 461 A1**
(43) Date of publication of application: **18.09.2024**
(21) Application number: 23204010.5
(22) Date of filing: 17.10.2023
(51) Int. Cl.: C01G 33/00, H01M 4/131, H01M 4/485

(54) **ACTIVE MATERIAL, ELECTRODE, SECONDARY BATTERY, BATTERY PACK, AND VEHICLE**

(30) Priority: 17.03.2023 JP 2023043275
(71) Applicant: Kabushiki Kaisha Toshiba, Tokyo 105-0023 (JP)
(72) Inventor: FUKUDA, Yumi, Minato-ku, Tokyo, 105-0023 (JP); ISE, Kazuki, Minato-ku, Tokyo, 105-0023 (JP); HOSHINA, Keigo, Minato-ku, Tokyo, 105-0023 (JP)
(74) Representative: Hoffmann Eitle

(57) **Abstract**

According to one approach, an active material is provided. The active material includes a Mo-containing niobium-titanium oxide having a monoclinic structure. A ratio I₂₅/I₂₄ of an intensity I₂₅ of a second peak appearing within a range of 2θ from 25.0° to 25.5° relative to an intensity I₂₄ of a first peak appearing within a range of 2θ from 23.5° to 24.5° is 0.5 or greater, according to X-ray diffraction spectroscopy for the active material.

## Description

### FIELD

The present disclosure relates to an active material, electrode, secondary battery, battery pack, and vehicle.

### BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are anticipated as a power source for vehicles such as hybrid electric automobiles, electric automobiles, an uninterruptible power supply for base stations for portable telephones, or the like. Therefore, the secondary battery is demanded to, in addition to having a high energy density, be excellent in other performances such as rapid charge-discharge performances and long-term reliability, as well. For example, not only is the charging time remarkably shortened in a secondary battery capable of rapid charge and discharge, but the battery is also capable of improving motive performances in vehicles such as hybrid electric automobiles, and efficient recovery of regenerative energy of motive force.

In order to enable rapid charge/discharge, electrons and lithium ions must be able to migrate rapidly between the positive electrode and the negative electrode. However, when a battery using a carbon-based negative electrode is repeatedly subjected to rapid charge and discharge, precipitation of dendrite of metallic lithium on the electrode may sometimes occur, raising concern of heat generation or ignition due to internal short circuits.

In light of this, a battery using a metal composite oxide in a negative electrode in place of a carbonaceous material has been developed. In particular, in a battery using an oxide of titanium in the negative electrode, rapid charge and discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium for the negative electrode has a problem that the energy density is low.

For example, an electrode potential of an oxide of titanium is about 1.5 V (vs. Li/Li⁺) with respect to metallic lithium electrode, which is higher (more noble) compared to potentials of a carbon-based negative electrodes. The potential of an oxide of titanium is electrochemically restricted due to being caused by oxidation-reduction reactions between Ti³⁺ and Ti⁴+ upon insertion and extraction of lithium. In addition, there is also a fact that rapid charge and discharge of lithium ions can be stably performed at a high electrode potential of about 1.5 V (vs. Li/Li⁺). Therefore, it has been conventionally difficult to reduce the electrode potential in order to improve the energy density.

On the other hand, considering the capacity per unit weight, the theoretical capacity of titanium dioxide (anatase structure) is about 165 mAh/g, and the theoretical capacity of spinel lithium-titanium oxides such as Li₄Ti₅O₁₂ is about 180 mAh/g. On another hand, the theoretical capacity of a general graphite based electrode material is 385 mAh/g and greater. As such, the capacity density of an oxide of titanium is significantly lower than that of the carbon based negative electrode material. This is due to there being few lithium-insertion sites in the crystal structure, and lithium tending to be stabilized in the structure, and thus, substantial capacity being reduced.

In view of the above circumstances, a new electrode material containing Ti and Nb has been studied. Such a niobium-titanium oxide material is expected to have a high charge/discharge capacity. For example, an oxide represented by TiNb₂O₇ has a high theoretical capacity exceeding 380 mAh/g. Therefore, the niobium-titanium oxide is expected as a high-capacity material in place of Li₄Ti₅O₁₂.

### BRIEF DESCRIPTION OF THE DRAWINGS

FIG. 1 is a cross-sectional view schematically showing an example of a secondary battery according to an approach.
FIG. 2 is an enlarged cross-sectional view of section A of the secondary battery shown in FIG. 1.
FIG. 3 is a partially cut-out perspective view schematically showing another example of the secondary battery according to an approach.
FIG. 4 is an enlarged cross-sectional view of section B of the secondary battery shown in FIG. 3.
FIG. 5 is a perspective view schematically showing an example of a battery module according to an approach.
FIG. 6 is an exploded perspective view schematically showing an example of a battery pack according to an approach.
FIG. 7 is a block diagram showing an example of an electric circuit of the battery pack shown in FIG. 6.
FIG. 8 is a partially see-through diagram schematically showing an example of a vehicle according to an approach.
FIG. 9 is a diagram schematically showing an example of a control system related to an electric system in the vehicle according to an approach.
FIG. 10 is a diagram showing an X-ray diffraction spectrum for active materials according to Examples 1 to 4 and Comparative Example 1.

### DETAILED DESCRIPTION

According to one approach, an active material is provided. The active material includes a Mo-containing niobium-titanium oxide having a monoclinic structure. A ratio I₂₅/I₂₄ of an intensity I₂₅ of a second peak appearing within a range of 2θ from 25.0° to 25.5° relative to an intensity I₂₄ of a first peak appearing within a range of 2θ from 23.5° to 24.5° is 0.5 or greater, according to X-ray diffraction spectroscopy for the active material.

According to another approach, provided is an electrode including the active material according to the above approach.

According to another approach, provided is a secondary battery including a positive electrode, a negative electrode, and an electrolyte. The negative electrode includes the electrode according to the above approach.

According to another approach, provided is a battery pack including the secondary battery according to the above approach.

According to another approach, provided is a vehicle including the battery pack according to the above approach.

According to the above approaches, provided are an active material that can realize a secondary battery that can exhibit high capacity and excellent cycle life performance, an electrode including the active material, a secondary battery including the electrode, a battery pack including the secondary battery, and a vehicle onto which the battery pack is installed.

Ti can be monovalent-reduced, from tetravalent to trivalent. In contrast, Nb can be divalent-reduced, from pentavalent to trivalent. For this reason, theoretically speaking, a high Nb stoichiometric ratio means that many lithium ions can be inserted and, in turn, a capacity is high. For example, for the family of niobium-titanium oxides that has a Wadsley-Roth phase crystal structure and can be represented by the general formula TiNbₓO_{2+2.5x}, the theoretical capacity thereof is 403-5441/ (133x+80) mAh/g, and the highest theoretical capacity approaches 403 mAh/g in accordance with the increase of the index x, which represents the Nb stoichiometric ratio. For example, the theoretical capacity of TiNb₂O₇ (x = 2) calculated by the above formula is 387 mAh/g. Similarly, the theoretical capacity of Ti₂Nb₆O₁₉ (x = 3) is 392 mAh/g, and the theoretical capacity of Ti₂Nb₁₄O₃₉ (x = 7) is 398 mAh/g.

As described above, the theoretical capacity of a high Nb composition niobium-titanium oxide is high. However, the capacity reported regarding a high Nb composition compound does not match up to that of TiNb₂O₇.

Hereinafter, approaches will be described with reference to the drawings. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in an actual device; they can however be appropriately design-changed, taking into account the following explanations and known technology.

### (First Approach)

According to a first approach, an active material is provided. The active material includes a Mo-containing niobium-titanium oxide. The oxide has a crystal structure of monoclinic structure. In an X-ray diffraction spectrum for the active material, a first peak appears within a range where 2θ is 23.5° to 24.5° and a second peak appears within a range where 2θ is 25.5° to 25.5° . A ratio I₂₅/I₂₄ of an intensity I₂₅ of the second peak relative to an intensity I₂₄ of the first peak is 0.5 or greater.

The active material may be an active material for a battery. The active material may be, for example, an electrode active material for use in a secondary battery such as a lithium ion battery, a nonaqueous electrolyte battery, etc. The active material may be, for example, an active material for use in the negative electrode of a secondary battery.

A Mo-containing niobium-titanium oxide having a peak intensity ratio I₂₅/I₂₄ of 0.5 or greater, where the ratio is that between peak intensities of the first peak that appears within the range 23.5° ≤ 2θ ≤ 24.5° and the second peak that appears within the range 25.0° ≤ 2θ ≤ 25.5° in the X-ray diffraction spectrum obtained by an X-ray diffraction (XRD) method using CuKα rays as an X-ray source, can exhibit a high capacity while maintaining a cycle life performance at a level equivalent to that of a high Nb composition niobium-titanium oxide. The ratio I₂₅/I₂₄ is preferably 0.9 or less. The ratio I₂₅/I₂₄ is more preferably 0.85 or less.

The first peak has a peak top within the range 23.5° ≤ 2Θ ≤ 24.5° in the XRD spectrum. The first peak can be observed in an XRD spectrum of various niobium-titanium oxides, regardless of a presence/absence of Mo. The second peak has a peak top in the range 25 . 0 ° ≤ 2θ ≤ 25. 5 ° in the XRD spectrum. The second peak can be observed in a Mo-containing niobium-titanium oxide.

How to conduct the wide-angle X-ray diffraction method is described later.

A niobium-titanium oxide that contains Mo can store more lithium ions (Li⁺) than a niobium-titanium oxide that does not contain Mo can. In contrast to titanium having a maximum valence of +4 and niobium having a maximum valence of +5, the maximum valence of molybdenum (Mo) is +6. By including Mo that can exhibit a larger change in valence, it is possible to increase the amount of Li⁺ that can be inserted into an oxide and increase a capacity of the oxide as an electrode active material. Specifically, by substituting Ti⁴⁺ with Mo⁶⁺, a high capacity can be achieved.

The composition of such a Mo-containing niobium-titanium oxide can be represented by the general formula Ti_{x-y}Mo_{y}Nb₁₂₋ₓO_{29+z}. The subscripts in the general formula fall within ranges of 1.5 ≤ x ≤ 2.2, 0 < y ≤ 0.7x, and -3 ≤ z ≤ 1, respectively. As represented by the above general formula, such a Mo-containing niobium-titanium oxide may be a compound in which Ti in a high Nb composition niobium-titanium oxide is partially substituted with Mo. As indicated by the upper limit of subscript y, this oxide may be a compound in which up to half of the Ti is substituted with Mo.

Next, the form, particle size, and specific surface area of the active material will be described.

### <Form>

The form of the active material according to the approach is not particularly limited. The active material may be, for example, particles of the abovementioned Mo-containing niobium-titanium oxide, or a powder made up of the particles included therein. The particles of Mo-containing niobium-titanium oxide can take, for example, a form of primary particles or a form of secondary particles formed by agglomeration of primary particles. The particles of Mo-containing niobium-titanium oxide may be a mixture of primary particles and secondary particles.

The particles of the Mo-containing niobium-titanium oxide may have a carbon-containing layer on a surface thereof. The carbon-containing layer may be attached to the surface of primary particles or may be attached to the surface of secondary particles. Alternatively, the active material may include secondary particles formed by agglomeration of primary particles having a carbon-containing layer attached on surfaces thereof. Such secondary particles can exhibit excellent electrical conductivity since carbon exists among the primary particles. A mode including such secondary particles is preferable since the active material-containing layer containing the secondary particles can exhibit a lower resistance.

### <Particle size>

An average particle size of the active material particles which are primary particles or secondary particles of the Mo-containing niobium-titanium oxide is not particularly limited. The average particle size of the active material particles is, for example, in a range of 0.1 µm to 50 um. The average particle size may be selected depending on the battery performance in demand. For example, in order to enhance rapid charge/discharge performance, the average particle size is preferably 1.0 um or less. By setting the average particle size within this range, a diffusion distance of lithium ions within the crystals can be shortened, and thus, the rapid charge/discharge performance can be improved. The average particle size can be determined by, for example, a laser diffraction method.

### <BET specific surface area>

A BET (Brunauer, Emmett, Teller) specific surface area of the active material is not particularly limited. However, the BET specific surface area is preferably 5 m²/g or more and less than 200 m²/g.

With a specific surface area of 5 m²/g or more, when using the active material in a battery, a contact area with an electrolyte can be secured, whereby good discharge rate performance can be easily obtained, and the charging time can also be shortened. On the other hand, when the specific surface area is less than 200 m²/g, the reactivity with the electrolyte does not become too high, and life performance can be improved. Further, coatability of a slurry containing the active material for use in the later-described production of an electrode can be improved.

Here, the specific surface area is measured by a method in which molecules with a known adsorption occupancy area is adsorbed onto surfaces of powder particles at a temperature of liquid nitrogen, and the specific surface area of the sample is determined from the amount of the molecules. Most often used is the BET method utilizing low-temperature and low-humidity physical adsorption of an inert gas. The BET method is based on BET theory, the most famous theory as a method for calculating the specific surface area, which is an extension of the Langmuir theory, a monolayer adsorption theory, to multilayer adsorption. The thus obtained specific surface area is referred to as BET specific surface area.

### <Manufacturing Method>

The active material according to the approach can be produced by a synthesis method described below.

After a titanium source, a niobium source, and a molybdenum source as starting materials are dissolved into an acidic solution, a gel is obtained by neutralizing the solution, which is dried to yield a precursor. By performing a heat treatment on the precursor, a Mo-containing niobium-titanium oxide can be obtained.

As the titanium source, titanium tetraisopropoxide (C₁₂H₂₈O₄Ti) can be used, for example. As the niobium source, a niobium ammonium oxalate hydrate (C₄H₄NNbO₉ · xH₂O) can be used, for example. As the molybdenum source, ammonium molybdate ((NH₄)₆Mo₇O₂₄·4H₂O) can be used, for example. As the acidic solution into which the Ti source, the Nb source, and the Mo source are dissolved, an oxalic acid aqueous solution can be used, for example. For the neutralization treatment, ammonia water can be used, for example. To dry the neutralized gel, an atmospheric heating method, a spray dry method, and the like can be adopted.

When the oxide is obtained by heating the precursor, the precursor is packed at a high density into a container having an appropriate opening. By increasing the density in such a manner, vaporization and diffusion of Mo is suppressed while sufficient oxidation of the precursor is encouraged. In the heat treatment, pre-firing (first firing) is performed before main firing is performed. Pre-firing is performed preferably at a temperature between 200 ° C and 400 ° C for 1 hour to 12 hours. By performing pre-firing, it is possible to remove trace impurity components (for example, water and organic matter) adsorbed on the precursor. Pre-firing may be omitted. The main firing (second firing) is performed preferably at the temperature between 900°C and 1500°C for 1 hour to 40 hours.

The active material according to the approach can be obtained not only by the above-described liquid phase synthesis method, but also by a common solid phase reaction method. As a specific example, the active material according to the approach can be obtained by mixing titanate (TiOz), a niobate oxide (Nb₂O₅ or NbOz), and a molybdate oxide (MoO₃ or MoO₂) with a mortar, ball mill, or the like, then firing in the air.

### <Powder X-Ray Diffraction Measurement of Active Material and Calculation of Peak Intensity Ratio I₂₅/I₂₄>

The powder X-ray diffraction measurement of the active material can be performed, for example, as follows.

First, the target sample is ground until an average particle size reaches about 5 µm. The ground sample is loaded into a holder part of a depth of 0.2 mm formed on a glass sample plate. At this time, care should be taken to fill the holder part sufficiently with the sample. In addition, precaution should be taken to load an amount of the sample that is neither excessive nor insufficient such that cracks, voids, and the like do not occur. Next, another glass plate is pressed from outside to flatten a surface of the sample filled into the holder part. Precaution should be taken not to cause recesses or protrusions with respect of a reference plane of the holder due to an excessive or insufficient amount of filling.

Next, the glass plate filled with the sample is set in a powder X-ray diffractometer, and a diffraction pattern (XRD pattern) is obtained using Cu-Kα rays.

Incidentally, there is a case where the orientation of the sample increases depending on a particle shape of the sample. In the case where there is high degree of orientation in the sample, there is the possibility of deviation of the peak or variation in an intensity ratio, depending on the filling state of the sample. The sample whose orientation is significantly high in this manner is measured using a glass capillary. Specifically, the sample is inserted into a capillary, and this capillary is placed on a rotary sample stage and measured. By such a measuring method, the orientation can be alleviated. A capillary formed of Lindeman glass having a diameter of 1 mm to 6 mm ϕ is preferably used as the glass capillary.

When performing the powder X-ray diffraction measurement on an active material included in an electrode, the measurements are performed, for example, as follows.

First, in order to ascertain the crystal structure of the active material, a state in which lithium ions are completely extracted from the active material is achieved. For example, in the case the active material is used in a negative electrode, the battery including the negative electrode is put into a completely-discharged state. For example, the discharged state of the battery can be achieved by repeating several times a discharging of the battery in a 25°C environment at 0.1 C current to a rated end voltage or to a battery voltage of 1.0 V, making the current value during discharge be 1/100 or lower than the rated capacity. There is a case where a lithium ion remains even in the discharged state.

Next, the battery is disassembled in a glove box filled with argon, and the electrode is taken out and washed with an appropriate solvent. As an appropriate solvent, for example, ethyl methyl carbonate may be used. If the washing of the electrode is insufficient, an impurity phase such as lithium carbonate and lithium fluoride may be mixed in due to the influence of the lithium ion remaining in the electrode. In such a case, it is preferable to use an airtight container within which measurement can be carried out in an inert gas. The washed electrode is cut so as to have the area approximately be equal to the area of the holder of the powder X-ray diffractometer, to thereby obtain a sample. The sample is directly attached to the glass holder and measured.

At this time, peaks derived from a metal foil serving as a current collector, an electro-conductive agent, a binder, and the like are measured and ascertained in advance using XRD. It is a matter of course that this operation can be omitted if such peaks have been ascertained in advance. When the peak of the current collector and the peak of the active material overlap with each other, it is desirable to perform the measurement after dislodging the active material-containing layer off from the current collector. This is in order to separate the overlapping peaks when quantitatively measuring the peak intensity. Although the active material-containing layer may be physically dislodged, the layer can be easily removed by applying ultrasonic waves in a solvent. When ultrasonic treatment is performed to dislodge the active material-containing layer from the current collector, an electrode body powder (including the active material, electro-conductive agent, and binder) can be collected by evaporating off the solvent. The powder X-ray diffraction measurement of the active material can be performed by filling for example, a Lindemann glass capillary or the like with the collected electrode body powder and performing the measurement. The electrode body powder collected by the ultrasonic treatment can also be subjected to various analysis other than the powder X-ray diffraction measurement.

As an apparatus for powder X-ray diffraction measurement, SmartLab manufactured by Rigaku Corporation, for example, is used. The measurement conditions are as follows:
X-ray source: Cu target
Output: 45kV 200mA
Soller slit: 5° for both incident and received light
Step width (2θ): 0.01 deg
Scan rate: 2 deg/min
Semiconductor detector: D/teX Ultra 250
Sample plate holder: flat glass sample plate holder (thickness: 0.5 mm)
Measurement range: 5° ≤ 2θ ≤ 90°

When another apparatus is used, measurement is performed using standard Si powder for powder X-ray diffraction to find conditions under which measurement results of the peak intensity, the half width, and the diffraction angle equivalent to the results obtained using the above-described apparatus can be obtained, and samples are measured under such conditions.

Conditions of the above powder X ray diffraction measurement is set, such that an XRD pattern applicable to Rietveld analysis is obtained. In order to collect data for Rietveld analysis, specifically, the measurement time or X ray intensity is appropriately adjusted in such a manner that the step width is made 1/3 to 1/5 of the minimum half width of the diffraction peaks, and the intensity at the peak position of strongest reflected intensity is 5,000 cps or more. Rietveld analysis can be performed, for example, based on the method described in "Funmatsu X-sen Kaiseki no Jissai (Reality of Powder X-Ray Analysis) ", first edition (2002), X-Ray Analysis Investigation Conversazione, The Japan Society for Analytical Chemistry, written and edited by Izumi Nakai and Fujio Izumi (Asakura Publishing Co., Ltd.).

Using the above-described method, information on the crystal structure of the measured active material can be obtained. For example, when the active material according to the first approach is measured as described above, the measured active material would be found to include an oxide having a monoclinic structure. In addition, the above-described measurement also allows examination of the crystallinity or symmetry of the crystal structure in the measurement sample, such as monoclinic system.

In the obtained diffraction spectrum, the peak intensity I₂₄ of the first peak having its peak top within the range of 2θ of 23.5° to 24.5° is determined. In the diffraction spectrum, the peak intensity I₂₅ of the second peak having its peak top within the range of 2Θ of 25.0° to 25.5° is also determined. Then, the peak intensity ratio I₂₅/I₂₄ is calculated.

### <Measurement Method of Composition of Niobium-Titanium Oxide>

The composition of the niobium-titanium oxide in the active material can be determined by inductively coupled plasma atomic emission spectroscopy analysis (ICP-AES analysis).

First, the target sample is pulverized. The pulverized sample is dissolved in an acid and subjected to inductively coupled plasma atomic emission spectroscopy analysis (ICP-AES analysis) . Through ICP-AES, the species and concentrations of elements included in the active material can be measured.

When measuring the composition for an active material included in an electrode, the measurement can be performed as follows, for example. First, the active material put in a state in which Li is completely extracted is prepared by the same procedures as those described above for the powder X-ray diffraction method. This active material is subjected to vacuum drying at a temperature of 140°C for 24 hours. Next, a total weight of the active material is measured in a dry atmosphere. This active material is dissolved in an acid and subjected to inductively coupled plasma atomic emission spectroscopy (ICP-AES) analysis. Through ICP-AES, the species and concentration of element contained in the active material can be measured.

According to the first approach, there is provided an active material including a Mo-containing niobium-titanium oxide having a monoclinic structure. In an X-ray diffraction spectrum obtained for the active material, an intensity I₂₄ of a first peak at 2Θ = 23.5° - 24.5° and an intensity I₂₅ of a second peak at 2θ = 25.0° - 25.5° have a relationship where a ratio I₂₅/I₂₄ is 0.5 or greater. The active material can realize a secondary battery that can exhibit high capacity and excellent cycle life performance.

### (Second Approach)

According to the second approach, an electrode is provided.

The electrode according to the second approach includes the active material according to the first approach. This electrode may be a battery electrode including the active material according to the first approach as a battery active material. The electrode as the battery electrode may be, for example, a negative electrode including the active material according to the first approach as a negative electrode active material.

The electrode may include a current collector and an active material-containing layer. The active material-containing layer may be formed on both of obverse and reverse surfaces or one surface of the current collector. The active material-containing layer may contain the active material, and optionally an electro-conductive agent and a binder.

The active material-containing layer may contain the active material according to the first approach alone, or may contain two or more species of the active materials according to the first approach. Furthermore, the active material-containing layer may contain a mixture obtained by mixing one specie or two or more species of the active materials according to the first approach with one species or two or more species of other active materials. A proportional content of the active material according to the first approach (the abovementioned Mo-containing niobium-titanium oxide) relative to the total mass of other active materials and the active material according to the first approach is desirably from 10% by mass to 100% by mass.

For example, in a case where the active material according to the first approach is included as the negative electrode active material, examples of such other active materials include lithium titanate having a ramsdellite structure (e.g., Li_{2+y}Ti₃O₇, 0 ≤ y ≤ 3), lithium titanate having a spinel structure (e.g., Li₄₊ₓTi₅O₁₂, 0 ≤ x ≤ 3), titanium dioxide (TiO₂), anatase titanium dioxide, rutile titanium dioxide, niobium pentoxide (Nb₂O₅), hollandite titanium composite oxide, orthorhombic titanium composite oxides, and other monoclinic niobium titanium oxides.

Examples of the orthorhombic titanium-containing composite oxide include a compound represented by Li₂₊ₐM^{I}_{2-b}Ti_{6-c}M^{II}_{d}O_{14+σ}. Here, M^{I} is at least one selected from the group consisting of Sr, Ba, Ca, Mg, Na, Cs, Rb and K. M^{II} is at least one selected from the group consisting of Zr, Sn, V, Nb, Ta, Mo, W, Y, Fe, Co, Cr, Mn, Ni and Al. The respective subscripts in the composition formula are specified as follows: 0 ≤ a ≤ 6, 0 ≤ b < 2, 0 ≤ c < 6, 0 ≤ d < 6, and -0.5 ≤ σ ≤ 0.5. Specific examples of the orthorhombic titanium-containing composite oxide include Li₂₊ₐNa₂Ti₆O₁₄ (0 ≤ a ≤ 6) .

Examples of the monoclinic niobium titanium oxide include a compound represented by LiₓTi_{1-y}M1_{y}Nb_{2-z}M2_{z}O_{7+δ}. Here, M1 is at least one selected from the group consisting of Zr, Si, and Sn. M2 is at least one selected from the group consisting of V, Ta, and Bi. The respective subscripts in the composition formula are specified as follows: 0 ≤ x ≤ 5, 0 ≤ y < 1, 0 ≤ z < 2, and -0.3 ≤ δ ≤ 0.3. Specific examples of the monoclinic niobium titanium composite oxide include LiₓNb₂TiO₇ (0 ≤ x ≤ 5) .

Another example of the monoclinic niobium titanium oxide is a compound represented by LiₓTi_{1-y}M3_{y+z}Nb_{2-z}O_{7-δ}. Here, M3 is at least one selected from the group consisting of Mg, Fe, Ni, Co, W, and Ta. The respective subscripts in the composition formula are specified as follows: 0 ≤ x < 5, 0 ≤ y < 1, 0 ≤ z < 2, and -0.3 ≤ δ ≤ 0.3.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, graphite, carbon nanotubes, and carbon nanofibers. One of these may be used as the electro-conductive agent, or alternatively, two or more may be used in combination as the electro-conductive agent. Alternatively, instead of using an electro-conductive agent, a carbon coating or an electro-conductive inorganic material coating may be applied to the surface of the active material particle.

The binder is added to fill gaps among the dispersed active material and also to bind the active material with the current collector. Examples of the binder include polytetrafluoroethylene (PTFE), polyvinylidene fluoride (PVdF), fluorine rubber, styrene-butadiene rubber, polyacrylate compounds, imide compounds, carboxymethyl cellulose (CMC), and salts of CMC. One of these may be used as the binder, or alternatively, two or more may be used in combination as the binder.

The blending proportions of active material, electro-conductive agent and binder in the active material-containing layer may be appropriately changed according to the use of the electrode. For example, in the case of using the electrode as a negative electrode of a secondary battery, the active material (negative electrode active material), electro-conductive agent and binder are preferably blended in proportions of 68% by mass to 96% by mass, 2% by mass to 30% by mass, and 2% by mass to 30% by mass, respectively. When the amount of electro-conductive agent is 2% by mass or more, the current collection performance of the active material-containing layer can be improved. When the amount of binder is 2% by mass or more, binding between the active material-containing layer and current collector is sufficient, whereby excellent cycling performances can be expected. On the other hand, an amount of each of the electro-conductive agent and binder is preferably 30% by mass or less, in view of increasing the capacity.

There may be used for the current collector, a material which is electrochemically stable at the potential (vs. Li/Li⁺) at which lithium (Li) is inserted into and extracted from the active material. For example in the case where the active material is used as a negative electrode active material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 µm to 20 µm. The current collector having such a thickness can maintain balance between the strength and weight reduction of the electrode.

The current collector may include a portion where the negative electrode active material-containing layer is not formed on a surface thereof. This portion may serve as a negative electrode current collecting tab.

The electrode may be fabricated by the following method, for example. First, active material, electro-conductive agent, and binder are suspended in a solvent to prepare a slurry. The slurry is applied onto one surface or both of obverse and reverse surfaces of a current collector. Next, the applied slurry is dried so as to obtain a stack of active material-containing layer and current collector. Then, the stack is subjected to pressing. The electrode can be fabricated in this manner.

Alternatively, the electrode may also be fabricated by the following method. First, active material, electro-conductive agent, and binder are mixed to obtain a mixture. Next, the mixture is formed into pellets. Then the electrode can be obtained by arranging the pellets onto the current collector.

The electrode according to the second approach includes the active material according to the first approach. Thus, the electrode can exhibit high capacity and excellent life performance.

### (Third Approach)

According to a third approach, there is provided a secondary battery including a negative electrode, a positive electrode, and an electrolyte. As the negative electrode, the secondary battery includes the electrode according to the second approach. That is, the secondary battery according to the third approach includes as the negative electrode, an electrode that includes the active material according to the first approach as a battery active material.

The secondary battery may further include a separator provided between the positive electrode and the negative electrode. The negative electrode, the positive electrode, and the separator may configure an electrode group. The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

The secondary battery may be, for example, a lithium secondary battery. The secondary battery also includes nonaqueous electrolyte secondary batteries including nonaqueous electrolyte(s).

Hereinafter, the negative electrode, positive electrode, electrolyte, separator, container member, negative electrode terminal, and positive electrode terminal will be described in detail.

### 1) Negative Electrode

The negative electrode may include a negative electrode current collector and a negative electrode active material-containing layer. The negative electrode current collector and the negative electrode active material-containing layer may respectively be the current collector and active material-containing layer that may be included in the electrode according to the second approach. The negative electrode active material-containing layer contains the active material according to the first approach as negative electrode active material.

Of the details of the negative electrode, portions that overlap with the details described in the second approach are omitted.

The density of the negative electrode active material-containing layer (excluding the current collector) is preferably from 1.8 g/cm³ to 2.8 g/cm³. The negative electrode having the density of the negative electrode active material-containing layer within this range is excellent in energy density and ability of holding the electrolyte. The density of the negative electrode active material-containing layer is more preferably from 2.1 g/cm³ to 2.6 g/cm³.

The negative electrode may, for example, be fabricated by the same method as that for the electrode according to the second approach.

### 2) Positive Electrode

The positive electrode may include a positive electrode current collector and a positive electrode active material-containing layer. The positive electrode active material-containing layer may be formed on one surface or both of obverse and reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., Li_{X}Mn_{y}Co_{1-y}O_{z}; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y ≤ 1, and LiₓCoPO₄; 0 < x ≤ 1), iron sulfate (Fe₂(SO₄)₃), vanadium oxides (e.g., V₂O₅), and lithium nickel cobalt manganese composite oxide (LiₓNi_{1-y-z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium manganese cobalt composite oxide (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiₓNi_{1-y-z}CO_{y}Mn_{z}O₂; 0 < x ≤ 1, 0 < y < 1, 0 < z < 1, y + z < 1) . The positive electrode potential can be made high by using these positive electrode active materials.

When an ambient temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle diameter of the positive electrode active material is preferably from 100 nm to 1 µm. The positive electrode active material having a primary particle size of 100 nm or more is easy to handle during industrial production. In the positive electrode active material having a primary particle size of 1 µm or less, in-solid diffusion of lithium ions can proceed smoothly.

The specific surface area of the positive electrode active material is preferably from 0.1 m²/g to 10 m²/g. With the positive electrode active material having a specific surface area of 0.1 m²/g or more, sufficient sites for inserting and extracting Li ions can be secured. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 µm to 20 µm, and more preferably 15 um or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface thereof. This portion may serve as a positive electrode current collecting tab.

The positive electrode may be fabricated by a method similar to that for the electrode according to the second approach, for example, using a positive electrode active material.

### 3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide (LiN(CF₃SO₂)₂), and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX) ; linear ethers such as dimethoxy ethane (DME) and diethoxy ethane (DEE); γ-butyrolactone (GBL), acetonitrile (AN), and sulfolane (SL) . These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C). The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of 1 × 10⁻⁶ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula Li₁₊ₓMα₂(PO₄)₃. Mα in the above general formula is, for example, one or more selected from the group consisting of titanium (Ti), germanium (Ge), strontium (Sr), zirconium (Zr), tin (Sn), aluminum (Al), and calcium (Ca) . The subscript x is within the range of 0 ≤ x ≤ 2.

Specific examples of the lithium phosphate solid electrolyte having the NASICON structure include a LATP compound represented by Li₁₊ₓAlₓTi₂₋ₓ(PO₄)₃ where 0.1 ≤ x ≤ 0.5; a compound represented by Li₁₊ₓAl_{y}Mβ_{2-y}(PO₄)₃ where Mβ is one or more selected from the group consisting of Ti, Ge, Sr, Zr, Sn, and Ca, 0 ≤ x ≤ 1, and 0 ≤ y < 1; a compound represented by Li₁₊ₓAlₓGe₂₋ₓ(PO₄)₃ where 0 ≤ x ≤ 2; a compound represented by Li₁₊ₓAlₓZr₂₋ₓ(PO₄)₃ where 0 ≤ x ≤ 2; a compound represented by Li_{1+x+y}AlₓMγ₂₋ₓSi_{y}P_{3-y}O₁₂ where Mγ is one or more selected from the group consisting of Ti and Ge, 0 < x ≤ 2, and 0 ≤ y < 3; and a compound represented by Li₁₊₂ₓZr₁₋ₓCaₓ(PO₄)₃ where 0 ≤ x < 1.

In addition to the above lithium phosphate solid electrolyte, examples of the oxide solid electrolyte include amorphous LIPON compounds represented by LiₓPO_{y}N_{z} where 2.6 ≤ x ≤ 3.5, 1.9 ≤ y ≤ 3.8, and 0.1 ≤ z ≤ 1.3 (e.g., Li_{2.9}PO_{3.3}N_{0.46}); a compound having a garnet structure represented by La₅₊ₓAₓLa₃₋ₓMδ₂O₁₂ where A is one or more selected from the group consisting of Ca, Sr, and Ba, Mδ is one or more selected from the group consisting of Nb and Ta, and 0 ≤ x ≤ 0.5; a compound represented by Li₃Mδ₂₋ₓL₂O₁₂ where Mδ is one or more selected from the group consisting of Nb and Ta, L may include Zr, and 0 ≤ x ≤ 0.5; a compound represented by Li₇₋₃ₓAlₓLa₃Zr₃O₁₂ where 0 ≤ x ≤ 0.5; a LLZ compound represented by Li₅₊ₓLa₃M5₂₋ₓZrₓO₁₂ where Mδ is one or more selected from the group consisting of Nb and Ta, and 0 ≤ x ≤ 2 (e.g., Li₇La₃Zr₂O₁₂); and a compound having a perovskite structure and represented by La_{2/3-x}LiₓTiO₃ where0 .3 ≤ x ≤ 0. 7.

One or more among the above compounds may be used as the solid electrolyte. Two or more of the above solid electrolytes may be used, as well.

Alternatively, in place of the nonaqueous electrolyte, a liquid aqueous electrolyte or gel aqueous electrolyte may be used as the electrolyte. The liquid aqueous electrolyte is prepared b dissolving, for example, the above-described electrolyte salt as solute in an aqueous solvent. The gel aqueous electrolyte is prepared by obtaining a composite of the liquid aqueous electrolyte and the above-described polymeric material. As the aqueous solvent, a solution including water is used. The Solution including water may be pure water or a mixed solvent between water and an organic solvent.

### 4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because at a certain temperature, such a porous film melts and can thereby shut off current.

### 5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

### 6) Negative Electrode Terminal

The negative electrode terminal may be made of a material that is electrochemically stable at the Li insertion-extraction potential of the negative electrode active materials mentioned above, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

### 7) Positive Electrode Terminal

The positive electrode terminal may be made of, for example, a material that is electrically stable in the potential range of 3 V to 4.5 V (vs. Li/Li⁺) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

Next, the secondary battery according to the approach will be more concretely described with reference to the drawings.

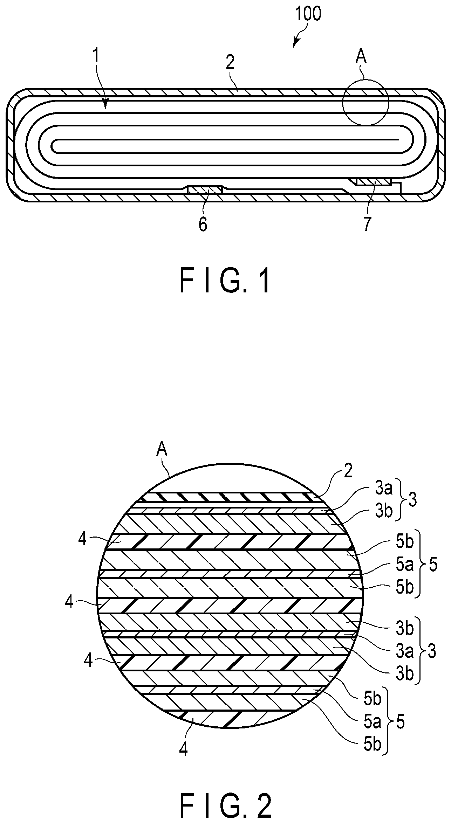

FIG. 1 is a cross-sectional view schematically showing an example of the secondary battery. FIG. 2 is an enlarged cross-sectional view of section A of the secondary battery shown in FIG. 1.

The secondary battery 100 shown in FIGS. 1 and 2 includes a bag-shaped container member 2 shown in FIG. 1, an electrode group 1 shown in FIGS. 1 and 2, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 1, the electrode group 1 is a wound electrode group in a flat form. The wound electrode group 1 in a flat form includes a negative electrode 3, a separator 4, and a positive electrode 5, as shown in FIG. 2. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 2. For the other portions of the negative electrode 3, negative electrode active material-containing layers 3b are formed on both of obverse and reverse surfaces of the negative electrode current collector 3a.

The positive electrode 5 includes a positive electrode current collector 5a and positive electrode active material-containing layers 5b formed on both of obverse and reverse surfaces of the positive electrode current collector 5a.

As shown in FIG. 1, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

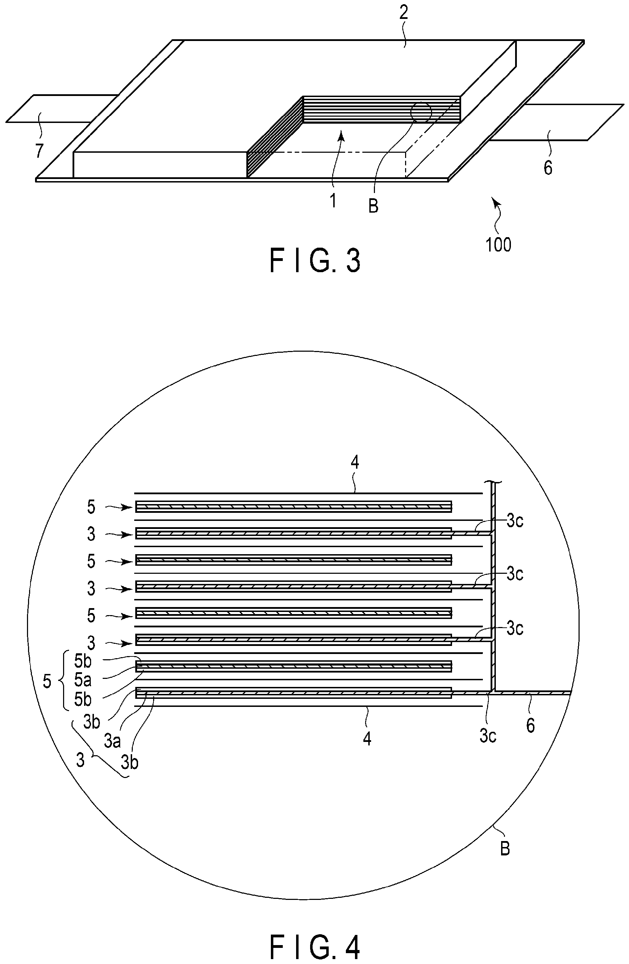

The secondary battery according to the approach is not limited to the secondary battery of the structure shown in FIGS. 1 and 2, and may be, for example, a battery of a structure as shown in FIGS. 3 and 4.

FIG. 3 is a partially cut-out perspective view schematically showing another example of the secondary battery. FIG. 4 is an enlarged cross-sectional view of section B of the secondary battery shown in FIG. 3.

The secondary battery 100 shown in FIGS. 3 and 4 includes an electrode group 1 shown in FIGS. 3 and 4, a container member 2 shown in FIG. 3, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 4, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces thereof.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 4, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the third approach includes the active material according to the first approach in the negative electrode. Thus, the secondary battery can exhibit high capacity and excellent life performance.

### (Fourth Approach)

According to a fourth approach, a battery module is provided. The battery module includes plural of secondary batteries according to the third approach.

In the battery module, each of the single-batteries may be arranged to be electrically connected in series or in parallel, or may be arranged in combination of in-series connection and in-parallel connection.

An example of the battery module according to the approach will be described next, with reference to the drawings.

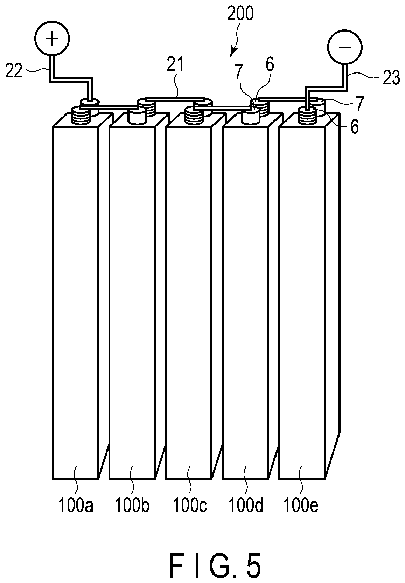

FIG. 5 is a perspective view schematically showing an example of the battery module. The battery module 200 shown in FIG. 5 includes five single-batteries 100a to 100e, four bus bars 21, a positive electrode-side lead 22, and a negative electrode-side lead 23 . Each of the five single-batteries 100a to 100e is the secondary battery according to the third approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 5 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the fourth approach includes the secondary battery according to the third approach. Therefore, battery module can exhibit high capacity and excellent life performance.

### (Fifth Approach)

According to a fifth approach, a battery pack is provided. The battery pack includes a battery module according to the fourth approach. The battery pack may include a single secondary battery according to the third approach, in place of the battery module according to the fourth approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

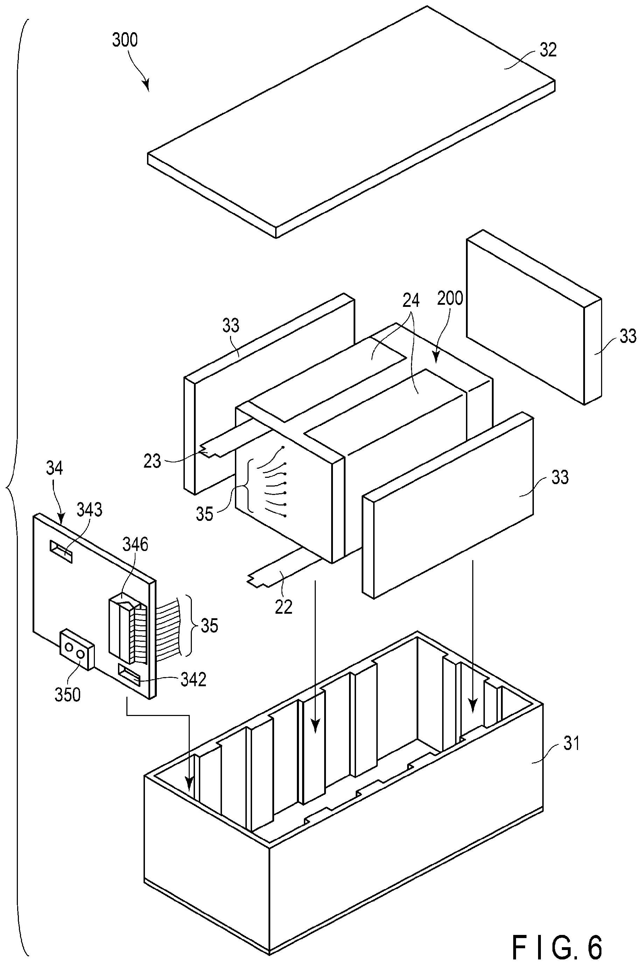

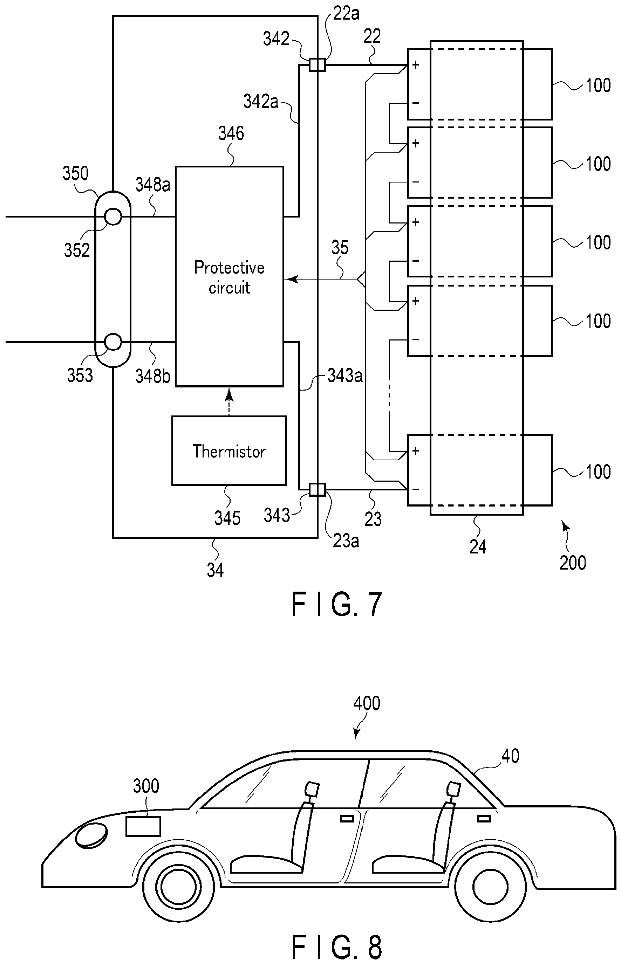

FIG. 6 is an exploded perspective view schematically showing an example of the battery pack. FIG. 7 is a block diagram showing an example of an electric circuit of the battery pack shown in FIG. 6.

A battery pack 300 shown in FIGS. 6 and 7 includes a housing container 31, a lid 32, protective sheets 33, a battery module 200, a printed wiring board 34, wires 35, and an insulating plate (not shown).

The housing container 31 shown in FIG. 6 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the third approach. The plural single-batteries 100 are electrically connected in series, as shown in FIG. 7. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode(s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350 . When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fifth approach is provided with the secondary battery according to the third approach or the battery module according to the fourth approach. Accordingly, the battery pack can exhibit high capacity and excellent life performance.

### (Sixth Approach)

According to a sixth approach, a vehicle is provided. The battery pack according to the fifth approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 8 is a partially see-through diagram schematically showing an example of the vehicle.

A vehicle 400, shown in FIG. 8 includes a vehicle body 40 and a battery pack 300 according to the fifth approach. In the example shown in FIG. 8, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 8, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

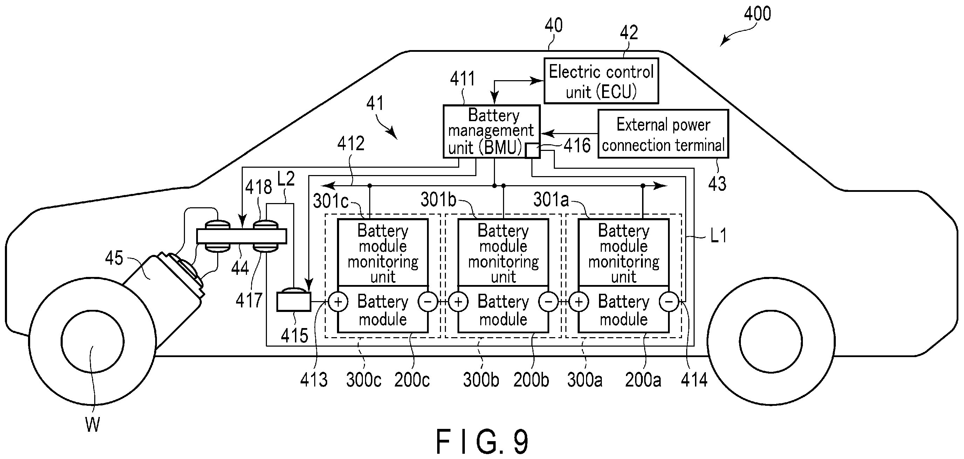

Next, with reference to FIG. 9, an aspect of operation of the vehicle according to the approach is explained.

FIG. 9 is a diagram schematically showing an example of a control system related to an electric system in the vehicle. A vehicle 400, shown in FIG. 9, is an electric automobile.

The vehicle 400, shown in FIG. 9, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 9, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the third approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c) . The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 9) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the sixth approach is installed with the battery pack according to the fifth approach. Thus, the vehicle can exhibit high performance and high reliability.

### EXAMPLES

Hereinafter, the above-described approaches will be described in more detail based on examples.

### <Synthesis Method>

### (Example 1)

A molybdenum-containing niobium-titanium oxide was synthesized as described below.

Oxalic acid was dissolved into water, and a 1M oxalic acid aqueous solution was prepared. Titanium tetraisopropoxide (C₁₂H₂₈O₄Ti) was dissolved in this oxalic acid aqueous solution, and then niobium ammonium oxalate hydrate (C₄H₄NNbO₉·xH₂O) and ammonium molybdate ((NH₄)₆Mo₇O₂₄·4H₂O) were dissolved in this solution. The proportions of the Ti source (C₁₂H₂₈O₄Ti), the Nb source (C₄H₄NNbO₉·xH₂O), and the Mo source ((NH₄)₆Mo₇O₂₄·4H₂O) were 7.4 mass%, 91.6 mass%, and 1 mass%, respectively. Thereafter, ammonia water was added dropwise into the solution to neutralize it, and a white gel was obtained. This gel was dried by a spray drier and a precursor was obtained. The obtained precursor was charged into an alumina crucible having an aspect ratio of about 1, up to the top ridge of the crucible, and was densely packed by tapping. Pre-firing was performed in air at 300°C for an hour and a heat treatment was successively performed at 900°C for four hours, using an electric furnace, and the active material of Example 1 was obtained.

### (Example 2)

Synthesis was performed by the same method as that in Example 1, except that the mixing proportions of the Ti source, the Nb source, and the Mo source were respectively changed to 5.3 mass%, 92.1 mass%, and 2.6 mass%, whereby the active material of Example 2 was obtained.

### (Example 3)

Synthesis was performed by the same method as that in Example 1, except that the mixing proportions of the Ti source, the Nb source, and the Mo source were respectively changed to 3.5 mass%, 92.6 mass%, and 3.9 mass%, whereby the active material of Example 3 was obtained.

### (Example 4)

Synthesis was performed by the same method as that in Example 1, except that the mixing proportions of the Ti source, the Nb source, and the Mo source were respectively changed to 8.1 mass%, 90.7 mass%, and 1.2 mass%, whereby the active material of Example 4 was obtained.

### (Example 5)

Synthesis was performed by the same method as that in Example 1, except that the mixing proportions of the Ti source, the Nb source, and the Mo source were respectively changed to 9.1 mass%, 88.9 mass%, and 2.0 mass%, whereby the active material of Example 5 was obtained.

### (Example 6)

Synthesis was performed by the same method as that in Example 1, except that the mixing proportions of the Ti source, the Nb source, and the Mo source were respectively changed to 8.0 mass%, 89.2 mass%, and 2.8 mass%, whereby the active material of Example 6 was obtained.

### (Comparative Example 1)

Synthesis was performed by the same method as that in Example 1, except that the mixing proportions of the Ti source, the Nb source, and the Mo source were respectively changed to 7.8 mass%, 92.2 mass%, and 0 mass%, whereby the active material of Comparative Example 1 was obtained.

The results of the measurement of the composition of the active material synthesized in each of Examples 1 to 6 and Comparative Example 1 are summarized in Table 1. Table 1 shows, together with the active material composition, the subscripts x, y, and z when representing the composition by the general formula Ti_{x-y}Mo_{y}Nb₁₂₋ₓO_{29+z}. The active material composition shown in Table 1 does not necessarily directly correspond to the general formula; however, if the composition is converted so as to fit the general formula, the subscripts in Table 1 would match.

**[Table 1]**

| | Analyzed Composition for Active Material | Ti_{x-y}Mo_{y}Nb₁₂₋ₓO_{29+z} | | |
|---|---|---|---|---|
| | | x | y | z |
| Example 1 | Ti_{1.4}Mo_{0.3}Nb_{10.3}O₂₇ | 1.7 | 0.3 | -2 |
| Example 2 | Ti_{0.9}Mo_{0.7}Nb_{10.4}O₂₆ | 1.6 | 0.7 | -3 |
| Example 3 | Ti_{0.6}Mo_{1.0}Nb_{10.4}O₂₆ | 1.6 | 1.0 | -3 |
| Example 4 | Ti_{1.5}Mo_{0.3}Nb_{10.2}O₂₇ | 1.8 | 0.3 | -2 |
| Example 5 | Ti_{1.6}Mo_{0.5}Nb_{9.9}O₂₇ | 2.1 | 0.5 | -2 |
| Example 6 | Ti_{1.4}MO_{0.7}Nb_{9.9}O₂₇ | 2.1 | 0.7 | -2 |
| Comparative Example 1 | Ti_{1.4}Nb_{10.6}O₃₁ | 1.4 | 0 | 2 |

### <Powder X-ray Diffraction Measurement and Calculation of Peak Intensity Ratio I₂₅/I₂₄>

For the active material powders obtained in Examples 1 to 6 and Comparative Example 1, the powder X-ray diffraction measurement described in the first approach was performed under conditions of a sampling interval of 0.01° and a scanning rate of 2°/min. In the obtained diffraction spectrum, the peak intensity ratio I₂₅/I₂₄ was calculated.

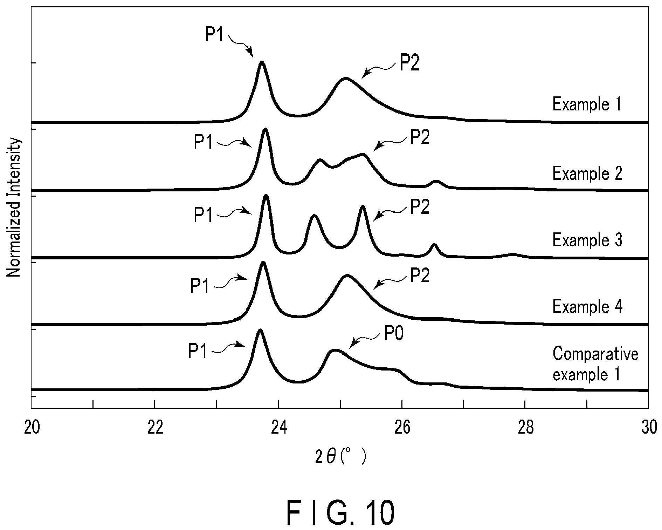

As an example, diffraction spectrums obtained by powder X-ray diffraction performed on the active materials of Examples 1 to 4 and Comparative Example 1 are shown in FIG. 10. As illustrated, for each of the active materials of Examples 1 to 4, the X-ray diffraction curve included both a first peak P1 in the range from 23.5° to 24.5° and a second peak P2 in the range from 25.0° to 25.5°. For the active material of Comparative Example 1, a first peak P1 was observed but no peak was observed in the range from 25.0° to 25.5°. In the diffraction curve of Comparative Example 1, a peak P0 was included on the wider-angle side relative to the first peak P1; however, the peak top of the peak P0 was located at 2θ < 25.0°.

### <Electrochemical measurement>

First, 100% by mass of the active material powder obtained in each example, 10% by mass of acetylene black and 5% by mass of carbon nanofiber as electro-conductive agents, and 10% by mass of polyvinylidene fluoride (PVdF) as a binder were added to N-methylpyrrolidone (NMP) and mixed to provide a slurry. The slurry was applied onto one side of a current collector made of an aluminum foil having a thickness of 15 µm, dried, and pressed, whereby an electrode having an electrode density of 2.4g/cm³ was prepared.

Next, an electrolyte solution was prepared by dissolving LiPF₆ supporting salt at a concentration of 1 mol/L in a mixed solvent in which ethylene carbonate (EC) and diethyl carbonate (DEC) were mixed at a volume ratio of 1 : 2.

The obtained electrode was used as a working electrode and Li metal was used as a counter electrode and a reference electrode to fabricate a glass cell using the obtained electrolyte solution, and electrochemical performance thereof was evaluated.

In the present examples, since the lithium metal is used as the counter electrode in the glass cell for measurement, electrode potentials of the Examples and the Comparative Examples are more noble than that of the counter electrode, and thus, the electrodes according to the Examples and Comparative Examples operate as positive electrodes. Therefore, the definitions of charging and discharging would be opposite when the electrodes of the Examples and the Comparative Examples are used as negative electrodes. In order to avoid confusion, herein regarding the present examples, directions in which lithium ions are inserted into the electrode are collectively referred to as charging, and directions of extracting lithium ions from the electrode are consistently referred to as discharging. Note, that the active materials according to the approach operate as a negative electrode, when used in combination with a known positive electrode material.

The fabricated electrochemical measurement cell was charged and discharged within a potential range of 0.7 V to 3.0 V relative to metallic lithium electrode. A charge/discharge current value was set to 0.2 C (hourly discharge rate), and 0.2 C discharge capacity was examined at room temperature. The value of 0.2 C discharge capacity is an index of energy density.

Next, the cells of each example was subjected to a life test in which 1 C charge and discharge were repeated within a potential range of 0.7 V to 3.0 V relative to metallic lithium electrode at room temperature. Under such conditions, charge and discharge were repeated 100 cycles (taking a charge and a discharge as one cycle), then a 0.2 discharge capacity was measured again. A cycle capacity retention ratio was calculated by dividing the discharge capacity after 100 cycles by the discharge capacity before the cycles (cycle capacity retention ratio = (0.2 discharge capacity after 100 cycles/0.2 discharge capacity before 100 cycles) × 100%).

The forgoing results are summarized in Table 2. Specifically, the table shows the peak intensity ratio I₂₅/I₂₄ in the XRD spectrum, 0.2C discharge capacity, and the cycle capacity retention ratio during the 100 cycles of charge-discharge for each example.

**[Table 2]**

| | I₂₅ / I₂₄ | 0.2C Discharge Capacity (mAh/g) | Cycle Capacity Retention Ratio (%) |
|---|---|---|---|
| Example 1 | 0.768 | 306 | 67.2 |
| Example 2 | 0.608 | 308 | 67.0 |
| Example 3 | 0.828 | 318 | 74.0 |
| Example 4 | 0.77 | 306 | 79.8 |
| Example 5 | 0.835 | 308 | 76.6 |
| Example 6 | 0.805 | 318 | 67.6 |
| Comparative Example 1 | (No second peak) | 285 | 72.7 |

As shown in Table 2, for each of the XRD spectrums in Examples 1 to 6, the peak intensity ratio I₂₅/I₂₄ was 0.5 or greater. In contrast, in Comparative Example 1, no second peak appeared in the range of the diffraction angle 2θ from 25.0° to 25.5°. The result of electrochemistry measurement shows that in the electrochemistry measurement cells according to Examples 1 to 6, while exhibiting a cycle capacity retention ratio equivalent to or superior than that in the cell of

Comparative Example 1, a higher discharge capacity than that in Comparative Example 1 was obtained. From these results, it can be recognized that with a Mo-containing niobium-titanium oxide in which the peak intensity ratio I₂₅/I₂₄ is 0.5 or greater, while maintaining excellent cycle life performance, capacity is improved.

According to at least one approach and example described above, an active material is provided. The active material includes a Mo-containing niobium-titanium oxide having a monoclinic structure. For the active material according to X-ray diffraction spectroscopy, a ratio I₂₅/I₂₄ of an intensity I₂₅ of a second peak appearing within 25.0° ≤ 2θ ≤ 25.5° to an intensity I₂₄ of a first peak appearing within 23.5° ≤ 2θ ≤ 24.5° is 0.5 or greater. The active material can realize a secondary battery that can exhibit high capacity and excellent cycle life performance.

The present disclosure also encompasses the following approaches of active materials, electrodes, and the like:
1. An active material comprising a Mo-containing niobium-titanium oxide having a monoclinic structure,
   a ratio I₂₅/I₂₄ of an intensity I₂₅ of a second peak appearing within a range of 2θ from 25.0° to 25.5° relative to an intensity I₂₄ of a first peak appearing within a range of 2θ from 23.5° to 24.5° being 0.5 or greater, according to X-ray diffraction spectroscopy.
2. The active material according to clause 1, wherein the ratio I₂₅/I₂₄ is 0.9 or less.
3. The active material according to clause 1 or 2, wherein the Mo-containing niobium-titanium oxide has a composition represented by a general formula Ti_{x-y}Mo_{y}Nb₁₂₋ₓO_{29+z}, where 1.5 ≤ x ≤ 2.2, 0 < y ≤ 0.7x, and -3 ≤ z ≤ 1.
4. An electrode comprising the active material according to any one of clauses 1 to 3.
5. The electrode according to clause 4, further comprising an active material-containing layer, the active material-containing layer comprising the active material.
6. A secondary battery comprising:
   a positive electrode;
   a negative electrode; and
   an electrolyte,
   the negative electrode comprising the electrode according to clause 4 or 5.
7. A battery pack comprising the secondary battery according to clause 6.
8. The battery pack according to clause 7, further comprising:
   an external power distribution terminal; and
   a protective circuit.
9. The battery pack according to clause 7 or 8, comprising plural of the secondary battery, the secondary batteries being electrically connected in series, in parallel, or in combination of in-series connection and in-parallel connection.
10. A vehicle comprising the battery pack according to any one of clauses 7 to 9.
11. The vehicle according to clause 10, wherein the vehicle comprises a mechanism configured to convert kinetic energy of the vehicle into regenerative energy.

While certain arrangements have been described, these arrangements have been presented by way of example only, and are not intended to limit the scope of the inventions. Indeed, the active materials, electrodes, and the like described herein may be embodied in a variety of other forms; furthermore various omissions, substitutions and changes in the form of the active materials, electrodes, and the like described herein may be made.

## Claims

1. An active material comprising a Mo-containing niobium-titanium oxide having a monoclinic structure,
a ratio I₂₅/I₂₄ of an intensity I₂₅ of a second peak appearing within a range of 2θ from 25.0° to 25.5° to an intensity I₂₄ of a first peak appearing within a range of 2Θ from 23.5° to 24.5° being 0.5 or greater, according to X-ray diffraction spectroscopy.

2. The active material according to claim 1, wherein the ratio I₂₅/I₂₄ is 0.9 or less.

3. The active material according to claim 1 or 2, wherein the Mo-containing niobium-titanium oxide has a composition represented by a general formula Ti_{x-y}Mo_{y}Nb₁₂₋ₓO_{29+z}, where 1.5 ≤ x ≤ 2.2, 0 < y ≤ 0.7x, and -3 ≤ z ≤ 1.

4. An electrode comprising the active material according to any one of claims 1 to 3.

5. The electrode according to claim 4, further comprising an active material-containing layer, the active material-containing layer comprising the active material.

6. A secondary battery (100) comprising:
a positive electrode (5);
a negative electrode (3); and
an electrolyte,
the negative electrode (3) comprising the electrode according to claim 4 or 5.

7. A battery pack (300) comprising the secondary battery (100) according to claim 6.

8. The battery pack (300) according to claim 7, further comprising:
an external power distribution terminal (350); and
a protective circuit (346).

9. The battery pack (300) according to claim 7 or 8, comprising plural of the secondary battery (100), the secondary batteries being electrically connected in series, in parallel, or in combination of in-series connection and in-parallel connection.

10. A vehicle (400) comprising the battery pack (300) according to any one of claims 7 to 9.

11. The vehicle (400) according to claim 10, wherein the vehicle comprises a mechanism configured to convert kinetic energy of the vehicle (400) into regenerative energy.
